# EUROPÄISCHE PATENTANMELDUNG

(11) **EP 2 477 326 A1**
(43) Veröffentlichungstag der Anmeldung: **18.07.2012**
(21) Anmeldenummer: 11151271.1
(22) Anmeldetag: 18.01.2011
(51) Int. Cl.: H02P 25/18, B60L 15/20

(54) **Elektromotor mit Parallel-Reihenschaltung von Teilwicklungen und Betriebsverfahren**

(71) Anmelder: Siemens Aktiengesellschaft, 80333 München (DE)
(72) Erfinder: Storath, Albrecht, 97618, Niederlauer (DE)

(57) **Zusammenfassung**

Bei einem vorgegebenen Umrichterstrom soll auf günstige Weise eine Erhöhung des Drehmoments eines Elektromotors zum Antrieb eines Fahrzeugs ermöglicht werden. Daher wird ein Elektromotor vorgeschlagen mit einer ersten Teilwicklung (1), die einer ersten Phase zugeordnet ist, und einer zweiten Teilwicklung (2), die der gleichen elektrischen Phase zugeordnet ist. Mit einer Schalteinrichtung sind die beiden Teilwicklungen (1,2) einerseits parallel und andererseits in Reihe schaltbar. Im Nennbetrieb werden die Teilwicklungen parallel geschaltet, während sie bei erhöhtem Drehmomentbedarf in Reihe geschaltet werden.

## Beschreibung

Die vorliegende Erfindung betrifft einen Elektromotor zum Antrieb eines Fahrzeugs mit mindestens einer Teilwicklung, die einer elektrischen Phase zugeordnet ist. Darüber hinaus betrifft die vorliegende Erfindung ein Verfahren zum Betreiben eines Fahrzeugs, das einen entsprechenden Elektromotor aufweist.

Der elektrisch betriebene Kraftfahrzeugantrieb ist im Allgemeinen mit einem Umrichter zur Speisung des Fahrmotors ausgestattet, der eine begrenzte Maximalleistung hat. Der zur Verfügung stehende Maximalstrom Imax kann bei einer gewählten Wicklungsauslegung ein maximales Drehmoment Mmax erzeugen, das über die so genannte Drehmomentkonstante kt nach der Beziehung M=kt . I berechnet werden kann. Die Drehmomentkonstante wird über die Wicklungsausführung festgelegt und ist eine fest eingeprägte Motorgröße (die Abnahme von kt aufgrund des Sättigungseffekts durch das so genannte Ankerquerfeld soll zunächst nicht berücksichtigt werden). Für spezielle Bewegungsvorgänge, z.B. beim Hochfahren an einer erhöhten Bordsteinkante bzw. Steilrampe oder bei so genanntem "Off-Road-Fahren" kann das aufgrund des Maximalstroms Imax verfügbare maximale Drehmoment Mmax nicht ausreichend sein.

Die Aufgabe der vorliegenden Erfindung besteht somit darin, zumindest vorübergehend ein höheres Maximaldrehmoment als dasjenige des Nennbetriebs zur Verfügung zu stellen.

Erfindungsgemäß wird diese Aufgabe gelöst durch einen Elektromotor zum Antrieb eines Fahrzeugs mit einer ersten Teilwicklung, die einer elektrischen Phase zugeordnet ist, eine zweite Teilwicklung, die der gleichen elektrischen Phase zugeordnet ist, und eine Schalteinrichtung, mit der die beiden Teilwicklungen einerseits parallel und andererseits in Reihe schaltbar sind.

Darüber hinaus wird erfindungsgemäß bereitgestellt ein Verfahren zum Betreiben eines Fahrzeugs, das einen Elektromotor mit einer ersten Teilwicklung, die einer elektrischen Phase zugeordnet ist, und einer zweiten Teilwicklung, die der gleichen elektrischen Phase zugeordnet ist, aufweist, durch Bereitstellen eines Nenndrehmoments durch einen Elektromotor, wobei die beiden Teilwicklungen des Elektromotors parallel geschaltet sind, Anfordern eines über dem Nenndrehmoment liegenden höheren Drehmoments und Schalten der beiden Teilwicklungen in Reihe, so dass das höhere Drehmoment bereitgestellt wird.

In vorteilhafter Weise ist es somit möglich, in einem Nennbetrieb, in dem die Teilwicklungen des Elektromotors parallel geschaltet sind, ein Nenndrehmoment bereitzustellen, und bei Anforderung in einem Überlastbetrieb die Teilwicklungen in Reihe zu schalten, so dass ein höheres Drehmoment als das Nenndrehmoment bei gleicher Speisung bereitgestellt werden kann.

Vorzugsweise ist der Elektromotor als permanenterregte Synchronmaschine ausgebildet. Derartige Maschinen haben sich für Kraftfahrzeugantriebe als zuverlässig und praktikabel erwiesen. Darüber hinaus kann der Elektromotor als Drehstrommotor ausgebildet sein, wobei je zwei Teilwicklungen für jede Phase vorgesehen sind, die mit der Schalteinrichtung paarweise parallel oder in Reihe schaltbar sind. Damit kann die Erfindung auch für übliche Drehstromantriebe verwendet werden.

In einer weiteren Ausführungsform kann der Elektromotor mindestens eine dritte Teilwicklung aufweisen, die der gleichen elektrischen Phase zugeordnet ist, und die mit der Schalteinrichtung sowohl parallel als auch in Reihe mit einer der oder beiden anderen Teilwicklungen schaltbar ist. Dies bedeutet, dass im Normalbetrieb parallel zu der ersten und zweiten Teilwicklung mindestens eine dritte Teilwicklung geschalten ist. Bei erhöhtem Drehmomentbedarf können dann alle Teilwicklungen einer Phase in Reihe geschaltet werden. Es kann aber auch beispielsweise eine Teilwicklung in Reihe mit einer Parallelschaltung von zwei Teilwicklungen geschaltet werden.

In bevorzugter Anwendung wird ein Kraftfahrzeug mit einem derartigen Elektromotor ausgestattet. Dabei ist es insbesondere vorteilhaft, wenn das Fahrzeug ein Bedienelement zum Anfordern eines über einem vorgegebenen Nenndrehmoment liegenden höheren Drehmoments aufweist, wobei bei Betätigen des Bedienelements die Schalteinrichtung die beiden Teilwicklungen des Elektromotors in Reihe schaltet. Je nach Fahrsituation kann somit der Fahrer vorübergehend ein höheres Drehmoment als das Maximaldrehmoment des Nennbetriebs anfordern. Somit können insbesondere steile Rampen, Bordsteine und dergleichen überwunden werden, wenn dies im Normalbetrieb nicht möglich ist.

Die vorliegende Erfindung wird nun anhand der beigefügten Zeichnungen näher erläutert, in denen zeigen:
- FIG 1: ein einphasiges Ersatzschaltbild für zwei Teilwicklungen eines Stators;
- FIG 2: einen Querschnitt durch eine permanenterregte Synchronmaschine;
- FIG 3: ein Ersatzschaltbild von zwei parallel geschalteten Teilwicklungen;
- FIG 4: ein Ersatzschaltbild von zwei in Reihe geschalteten Teilwicklungen;
- FIG 5: eine M-I-Kennlinie für Reihen- und Parallelschaltung;
- FIG 6: eine Drehmomentenkennlinie über der Drehzahl für Reihen- und Parallelschaltung.

Die nachfolgend näher geschilderten Ausführungsbeispiele stellen bevorzugte Ausführungsformen der vorliegenden Erfindung dar.

Prinzipiell kann das Problem, ein höheres Drehmoment als das Maximaldrehmoment im Normalbetrieb zur Verfügung zu stellen, relativ einfach durch die Installation eines entsprechend großen Umrichters mit entsprechend großem Maximalstrom gelöst werden. Der Nachteil ist allerdings, dass der Umrichter für die normalen Bewegungsvorgänge, z. B. Stadt- oder Überlandfahrten, überdimensioniert ist. Das führt zu einer größeren Gewichtsbelastung, zu höheren Umrichterverlusten und zu schlechterem Wirkungsgrad und auch zu höheren Umrichterkosten.

Es wird daher erfindungsgemäß eine schaltungstechnische Lösung des Problems der Bereitstellung eines höheren Drehmoments vorgeschlagen. Damit ist eine deutliche Erhöhung - bis zu einer Verdopplung - des Maximalmoments bei gegebenem Maximalstrom möglich, wobei die obigen Probleme der Überdimensionierung nicht gegeben sind.

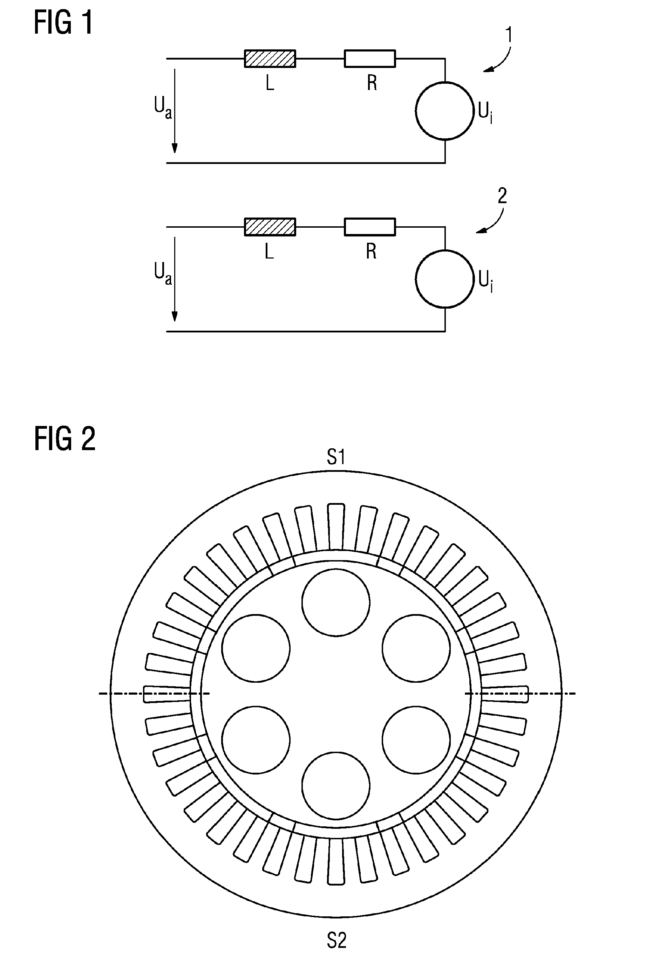

Ausgangspunkt ist beispielsweise ein PM-Synchronmotor, wie er beispielhaft in FIG 2 im Querschnitt dargestellt ist. Die Motorwicklung ist für jede Phase mit zwei parallelen Ankerzweigen bzw. Teilwicklungen ausgeführt. Ein einphasiger Motor besitzt demnach zwei Teilwicklungen und ein dreiphasiger Motor entsprechend sechs Teilwicklungen. Prinzipiell kann die Anzahl der Teilwicklungen pro Phase auch höher sein, z.B. drei Teilwicklungen, vier Teilwicklungen etc.

FIG 1 zeigt für eine einzige Phase des Elektromotors ein erstes Ersatzschaltbild 1 für eine erste Teilwicklung und ein zweites Ersatzschaltbild 2 für eine zweite Teilwicklung. Jedes dieser Ersatzschaltbilder 1, 2 stellt ein einphasiges Ersatzschaltbild der Teilwicklung einer "Statorhälfte" dar. In FIG 2 sind die Statorhälften S1 und S2 symbolisch dargestellt. In der Praxis sind die Teilwicklungen natürlich nicht auf eine geometrische Hälfte des Stators beschränkt. Vielmehr erstreckt sich jede Teilwicklung über den gesamten Umfang des Stators. Beispielsweise befindet sich eine Teilwicklung einer Phase in jeder zweiten Nut von denjenigen Nuten, die dieser Phase zugeordnet sind. Zur theoretischen Betrachtung der Wirkungsweise der erfindungsgemäßen Verschaltung kann man sich die Teilwicklungen jedoch auf zwei Statorhälften verteilt angeordnet denken.

Jedes Ersatzschaltbild 1, 2 besteht hier aus einer Reihenschaltung einer Stranginduktivität L für die Teilwicklung, einem Strangwiderstand R für die Teilwicklung und einer Spannungsquelle Ui, die die induzierte bzw. innere Motorspannung für die Teilwicklung repräsentiert. An dieser Reihenschaltung liegt eine äußere Spannung Ua, die von einem Umrichter geliefert wird. Die innere Spannung Ui ist der äußeren Spannung Ua entgegengerichtet.

Beide Teilwicklungen 1, 2 sind symmetrisch, weshalb auch die beiden Ersatzschaltbilder gleich sind.

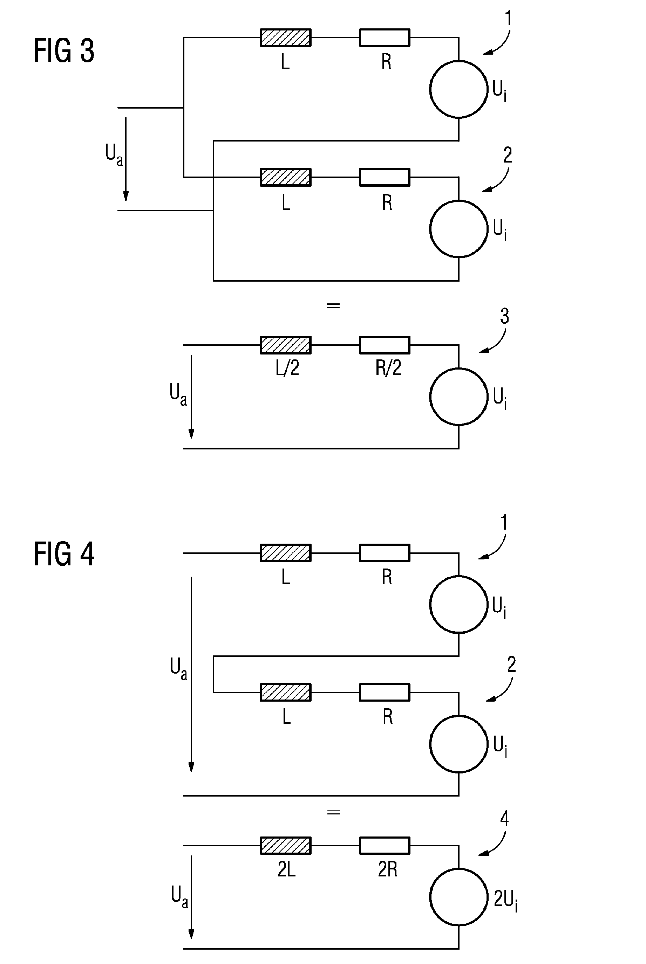

Im Normalbetrieb sind die beiden Teilwicklungen parallel geschaltet, was in FIG 3 angedeutet ist. Das Parallelschalten der zwei Ersatzschaltbilder 1 und 2 führt zu dem in FIG 3 unten dargestellten Gesamtersatzschaltbild 3. Die Parallelschaltung der Impedanzen führt zu einer Gesamtinduktivität von L/2 und einem Gesamtwiderstand von R/2. Die innere Spannung Ui hingegen ist in beiden parallelen Teilwicklungen gleich und bleibt somit auch im Gesamtersatzschaltbild 3 erhalten. Die innere Spannung Ui ist proportional zur Drehmomentenkonstante kt, so dass mit dem Maximalstrom Imax eben über die Bedingung M = kt · I das Maximaldrehmoment Mmax gegeben ist.

Für einen Betrieb mit erhöhtem Drehmomentbedarf werden nun die Teilwicklungen in Reihe geschaltet. Bei einer Drehstrommaschine bedarf es hierzu eines dreipoligen Schalters, der für jede Phase die jeweiligen Teilwicklungen paarweise in Serie schaltet. Diese Serienschaltung der Teilwicklungen ist in FIG 4 mit der Serienschaltung der Ersatzschaltbilder 1 und 2 angedeutet. Es resultiert daraus ein Gesamtersatzschaltbild 4 für die Reihenschaltung. Die Gesamtinduktivität beträgt demnach 2L und der Gesamtwiderstand 2R. Durch die Reihenschaltung ergibt sich ferner eine Verdopplung der inneren Spannung, so dass die gesamte innere Spannung 2Ui beträgt. Die äußere Spannung Ua ist hingegen unverändert. Auch in FIG 4 ist nur das Ersatzschaltbild für eine Phase wiedergegeben. Für die doppelte innere Spannung 2Ui ergibt sich die doppelte Drehmomentkonstante 2 · kt.

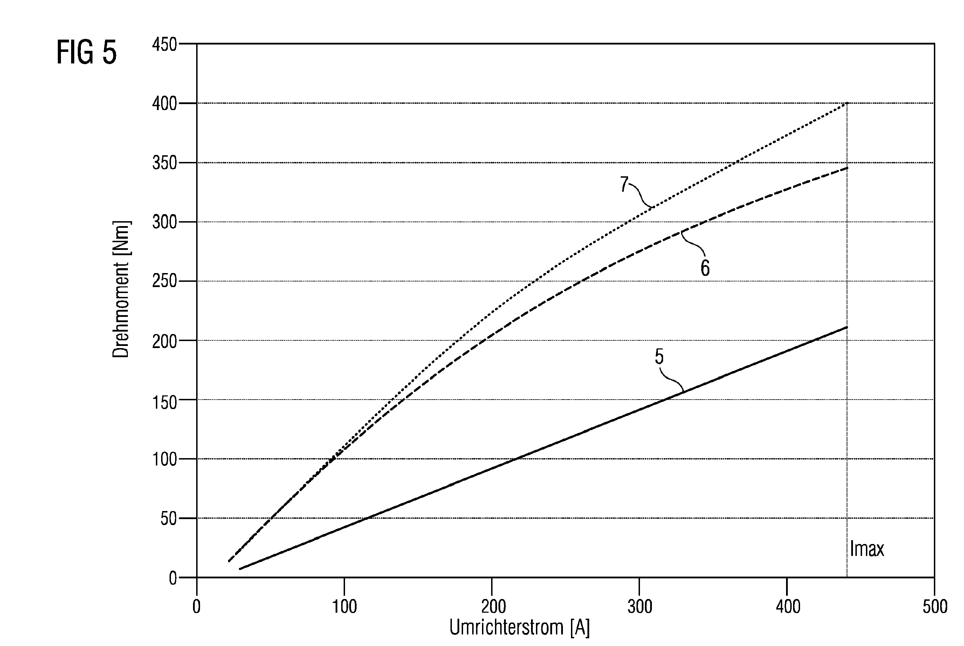

FIG 5 zeigt den Effekt des Umschaltens von der Parallelschaltung zu der Reihenschaltung. In dem in FIG 5 dargestellten Beispiel steigt die M-I-Kennlinie 5 bei Parallelschaltung für einen Umrichterstrom von 0 A bis etwa 430 A (entspricht hier dem Maximalstrom des gewählten Umrichters) entsprechend einem Drehmoment von 0 Nm bis etwa 210 Nm linear an. Sättigungseffekte sind hier noch nicht zu erkennen.

Werden die Teilwicklungen in Reihe geschaltet, so ergibt sich die Kennlinie 6. Wegen Sättigungseffekten im magnetischen Kreis aufgrund des Ankerquerfelds führt eine Verdopplung der Drehmomentkonstante nicht direkt zu einer Verdopplung des Maximalmoments. D. h. die Auslegung für den magnetischen Kreis muss so gestaltet werden, dass im Fall der Reihenschaltung erst relativ spät, nämlich bei hoher Strombelastung, ein Sättigungseffekt mit entsprechendem Rückgang der Drehmomentkonstante eintritt. Erst mit dieser Maßnahme wird der Effekt der Verdopplung der Drehmomentkonstante auch zu einer Verdopplung des Drehmoments führen, was die Kennlinie 7 für optimale Motorauslegung mit geringem Sättigungseffekt zeigt.

Die optimale Aktivteil- bzw. Motorauslegung zur Unterdrückung des Ankerquerfelds ist durch folgende Maßnahmen zu erreichen: z. B. hohe Polpaarzahl, großer magnetischer Luftspalt, ausreichend bemessene Zahn- und Jochbreiten und/oder gut magnetisierbare Elektrobleche.

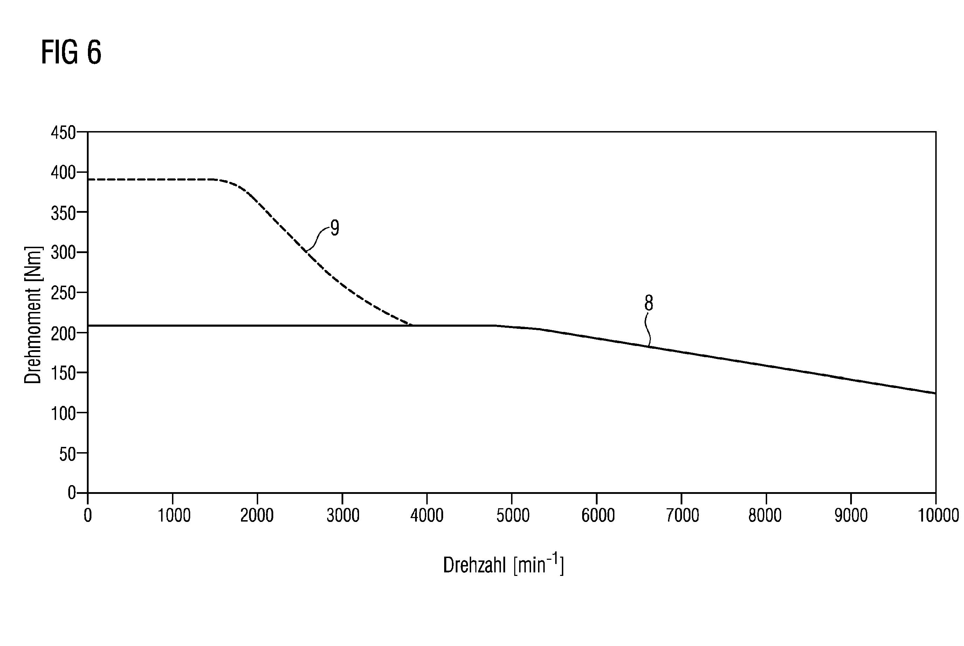

FIG 6 zeigt einen maximalen Momentenverlauf 8 bei Parallelschaltung der Teilwicklungen. Es ist zu erkennen, dass das Drehmoment zu höheren Drehzahlen hin sinkt. Dies rührt daher, dass die innere Spannung, d. h. die induzierte Spannung, bei höherer Drehzahl steigt, während die äußere Spannung Ua gleich bleibt. Dies bedeutet, dass in die Teilwicklung weniger Strom fließen kann, wodurch eben das Drehmoment sinkt.

Wird nun bei niedrigen Drehzahlen ein hohes Drehmoment gefordert, werden die Teilwicklungen in Reihe geschaltet, so dass das Drehmoment in dem Beispiel von FIG 6 im Drehzahlbereich unter 4000 min⁻¹ gemäß dem Momentenverlauf 9 über demjenigen der Parallelschaltung liegt. Bei kleinen Drehzahlen unter etwa 2000 min⁻¹ lässt sich so annäherend eine Verdopplung des maximalen Drehmoments erreichen.

Aus FIG 6 ist weiterhin zu erkennen, dass es nicht günstig ist, die Wicklungen in jedem Drehzahlbereich in Reihenschaltung zu betreiben und den Umrichter entsprechend groß auszulegen. Das maximale Drehmoment 9 der Reihenschaltung sinkt nämlich bei etwa 4000 Umdrehungen unter das maximale Drehmoment 8 der Parallelschaltung. Dies liegt daran, dass die innere Spannung der Reihenschaltung doppelt so schnell ansteigt, wie die innere Spannung der Parallelschaltung. Somit sinkt der in die Teilwicklungen fließende Strom bei Reihenschaltung mit steigender Drehzahl wesentlich markanter als dies bei Parallelschaltung der Fall ist. Demzufolge ist es von Vorteil bei niedrigen Drehzahlen die Reihenschaltung zu verwenden, wenn dies erforderlich ist, und bei höheren Drehzahlen die Parallelschaltung einzusetzen. Soll beispielsweise mit dem Fahrzeug eine steile Rampe überwunden werden, so erfolgt dies in Regel mit niedrigen Drehzahlen, so dass die Teilwicklungen in Reihe geschaltet werden können, womit sich ein entsprechend hohes Drehmoment ergibt.

Durch die beschriebene Reihen-Parallelschaltung der Teilwicklungen wird auf elektrische Weise ein ähnlicher Effekt, wie die mechanische Umschaltung auf eine andere Getriebeübersetzung mit dem Übersetzungsfaktor 2 erzielt. Es kann somit ein teures Getriebe bzw. eine teure Getriebestufe eingespart werden.

Ein weiterer Vorteil der erfindungsgemäßen Reihen-Parallelschaltung der Teilwicklungen ist die nahezu Verdopplung des Maximalmoments bei gegebener Umrichternennleistung, denn der Umrichter kann vorübergehend mit Überlast betrieben werden. Daher muss der Umrichter auch nicht für höhere Dauerströme ausgelegt sein, so dass insgesamt trotz des erhöhten Drehmoments ein geringes Umrichtergewicht erzielt werden kann. Außerdem ergeben sich geringere Umrichterverluste bei gleich bleibenden Motorverlusten und somit ein besserer Gesamtwirkungsgrad.

## Patentansprüche

1. Elektromotor zum Antrieb eines Fahrzeugs mit
- einer ersten Teilwicklung, die einer elektrischen Phase
zugeordnet ist,
**gekennzeichnet durch**
- eine zweite Teilwicklung, die der gleichen elektrischen Phase zugeordnet ist, und
- eine Schalteinrichtung, mit der die beiden Teilwicklungen einerseits parallel und andererseits in Reihe schaltbar sind.

2. Elektromotor nach Anspruch 1, der als permanentmagneterregte Synchronmaschine ausgebildet ist.

3. Elektromotor nach Anspruch 1 oder 2, der als Drehstrommaschine ausgebildet ist, wobei je zwei Teilwicklungen für jede Phase vorgesehen sind, die mit der Schalteinrichtung paarweise parallel oder in Reihe schaltbar sind.

4. Elektromotor nach einem der vorhergehenden Ansprüche, der mindestens eine dritte Teilwicklung aufweist, die der gleichen elektrischen Phase zugeordnet ist, und die mit der Schalteinrichtung sowohl parallel als auch in Reihe mit einer der oder beiden Teilwicklungen schaltbar ist.

5. Kraftfahrzeug mit einem Elektromotor nach einem der vorhergehenden Ansprüche.

6. Kraftfahrzeug nach Anspruch 5, das ein Bedienelement zum Anfordern eines über einem vorgegebenen Nenndrehmoment liegenden höheren Drehmoments aufweist, wobei bei Betätigen des Bedienelements die Schalteinrichtung die beiden Teilwicklungen des Elektromotors in Reihe schaltet.

7. Verfahren zum Betreiben eines Fahrzeugs, das einen Elektromotor mit einer ersten Teilwicklung, die einer elektrischen Phase zugeordnet ist, und einer zweiten Teilwicklung, die der gleichen elektrischen Phase zugeordnet ist, aufweist, **gekennzeichnet durch**
- Bereitstellen eines Nenndrehmoments (5,8) **durch** einen Elektromotor, wobei die beiden Teilwicklungen des Elektromotors parallel geschaltet sind,
- Anfordern eines über dem Nenndrehmoment (5,8) liegenden höheren Drehmoments (7,9) und
- Schalten der beiden Teilwicklungen in Reihe, so dass das höhere Drehmoment (7,9) bereitgestellt wird.

8. Verfahren nach Anspruch 7, wobei der Elektromotor gemäß Anspruch 3 ausgebildet ist und bei Anforderung des höheren Drehmoments sämtliche Teilwicklungen jeweils einer Phase in allen Phasen gleichzeitig in Reihe geschaltet werden.
